# EUROPÄISCHE PATENTANMELDUNG

(11) **EP 0 882 389 A1**
(43) Veröffentlichungstag der Anmeldung: **09.12.1998**
(21) Anmeldenummer: 98110129.8
(22) Anmeldetag: 04.06.1998
(51) Int. Cl.: A01D 45/02

(54) **Reihenloses Schneidwerk**

(30) Priorität: 07.06.1997 DE 19724058
(71) Anmelder: SAME DEUTZ-FAHR S.P.A., 24047 Treviglio (Bergamo) (IT)
(72) Erfinder: Von Allwörden, Wilhelm, 89168 Oberstotzingen (DE)
(74) Vertreter: Quinterno, Giuseppe

(57) **Zusammenfassung**

Eine derartige bekanntes Schneidwerk weist zwei Einzugsvorrichtungen 4 auf, wobei seitlich neben jeder der beiden Einzugsvorrichtungen 4 eine Schneidvorrichtung 5 angeordnet ist. Jeweils eine Einzugsvorrichtung 4 und eine Schneidvorrichtung 5 bilden einen Arbeitsbereich. Zum Einsatz dieser Maschine muß das Erntegut in Reihen stehen, deren Abstand genau dem Abstand der beiden Arbeitsbereiche entspricht. Dies erfordert schon bei der Aussaat des Erntegutes die genaue Einhaltung des Abstandes zwischen den einzelnen Pflanzreihen und später bei der Ernte ein sehr genaues Fahren der Erntemaschine.

Erfindungsgemäß sind die Schneidvorrichtungen 5 in Fahrtrichtung vor den Drehachsen der Einzugsvorrichtungen 4 angeordnet und einer Einzugsvorrichtung 4 sind mehrere Schneidvorrichtungen zugeordnet. Hierbei ist die Anzahl der einer Einzugsvorrichtung 4 zugeordneten Schneidvorrichtungen 5 abhängig von dem Durchmesser und der Ausbildung der Einzugsvorrichtung 4. Diese Schneidwerk arbeitet unabhängig von Reihenabstand und Reihenrichtung des Erntegutes.

## Beschreibung

Die Erfindung betrifft eine landwirtschaftliche Maschine zum Mähen und Weiterverarbeiten von stengelartigem Erntegut, die die Stengel des Ernteguts im wesentlichen stehend mäht und einer Weiterverarbeitungsvorrichtung zuführt, wobei zwischen zwei die Gesamtbreite der Mäheinrichtung bestimmenden Außenführungen zumindest zwei in Fahrtrichtung im wesentlichen nebeneinander angeordnete und um eine zumindest angenäherte vertikale Achse rotierende, mit abstehenden Mitnehmerzähnen versehene Einzugsvorrichtungen vorhanden sind, wobei den Einzugsvorrichtungen Schneidvorrichtungen zugeordnet sind.

Eine derartige gattungsgemäße Maschine ist aus der DE-PS 26 21 716 bekannt. Diese Maschine weist zwei Einzugsvorrichtungen auf, wobei seitlich neben jeder der beiden Einzugsvorrichtungen eine Schneidvorrichtung angeordnet ist. Jeweils eine Einzugsvorrichtung und eine Schneidvorrichtung bilden einen Arbeitsbereich. Zum Einsatz dieser Maschine muß das Erntegut in Reihen stehen, deren Abstand genau dem Abstand der beiden Arbeitsbereiche entspricht. Dies erfordert schon bei der Aussaat des Erntegutes die genaue Einhaltung des Abstandes zwischen den einzelnen Pflanzreihen und später bei der Ernte ein sehr genaues Fahren der Erntemaschine.

Man hat auch schon versucht, Erntemaschinen zu entwickeln, die unabhängig von Reihenabstand und Reihenrichtung des Ernteguts arbeiten können. Eine derartige Maschine ist in der EP-B 0 099 527 beschrieben. Bei dieser Maschine sind jeweils die Einzugsvorrichtungen und die Schneidvorrichtungen miteinander kombiniert und bilden übereinander angeordnete Baueinheiten, die um eine gemeinsame Achse mit unterschiedlicher Drehzahl rotieren. Um das Erntegut diesen Baueinheiten zuzuführen und gleichzeitig zu verhindern, daß es nach dem Mähen umfällt, weist die Maschine den kombinierten Einzugsvorrichtungen und Schneidvorrichtungen zugeordnete Teilerspitzen auf, die je einen seitlich wegführenden Führungsfinger aufweisen, der bis in den Bereich hinter die nächste Teilerspitze reicht.

Der Erfindung liegt die Aufgabe zugrunde, eine Maschine zum Mähen und Weiterverarbeiten von stengelartigem Erntegut bereitzustellen, die unabhängig von Reihenabstand und Reihenrichtung des Erntegutes arbeitet.

Diese Aufgabe wird dadurch gelöst, daß die Schneidvorrichtungen in Fahrtrichtung vor den Drehachsen der Einzugsvorrichtungen angeordnet sind und daß einer Einzugsvorrichtung mehrere Schneidvorrichtungen zugeordnet sind. Hierbei ist die Anzahl der einer Einzugsvorrichtung zugeordneten Schneidvorrichtungen abhängig von dem Durchmesser und der Ausbildung der Einzugsvorrichtung. Vorzugsweise ist die Einzugsvorrichtung trommelförmig ausgebildet, kann aber auch als Förderband ausgebildet sein, das über zwei oder mehr Führungswalzen geführt ist. Die Anzahl der Schneidvorrichtungen ist so bemessen, daß alle Stengel des Erntegutes im Bereich des Zusammenwirkens der Einzugsvorrichtung, und einer Schneidvorrichtung ohne wegzuknicken sicher erfaßt und abgeschnitten werden. In bevorzugter Ausführung sind jeder Einzugseinrichtung drei Schneideinrichtungen zugeordnet.

In Weiterbildung der Erfindung ist es vorgesehen, daß die Schneidvorrichtung eine untenliegende Messerscheibe und eine obenliegende Transporteinrichtung mit zumindest einem Zahnkranz aufweist. Die Messerscheibe kann als ein durchgehendes Rundmesser ausgebildet oder aber auch mit Messerzähnen bestückt sein. Vorzugsweise sind zwei übereinanderliegende Zahnkränze vorgesehen, die die Stengel des Ernteguts greifen und in einen später erläuterten Einführspalt einführen. Zusätzlich kann oberhalb der Messerscheibe ein Sägezahnblatt, das auch die Stengel führt angebracht sein. Dabei sind in weiterer Ausgestaltung die Messerscheibe, das Sägezahnblatt und die Zahnkränze Schneideinrichtung starr miteinander verbunden und rotieren somit insbesondere mit gleicher Drehzahl.

In Weiterbildung der Erfindung weist die Einzugsvorrichtung zumindest einen Mitnehmerzahnkranz und eine untenliegende Messerscheibe auf. Die Messerscheibe kann wie die der Schneidvorrichtung ausgebildet sein, wobei je eine Messerscheibe von Schneidvorrichtung und Einzugsvorrichtung zusammenwirken. Vorzugsweise sind die Radien oder Messerscheiben größer als der Achsabstand, so daß sie sich überschneiden. Die Einzugsvorrichtung kann wie die Schneidvorrichtung auch oberhalb der Messerscheibe ein Sägezahnblatt aufweisen. Diese Bauteile können alle miteinander verbunden sein und mit gleicher Drehzahl rotieren. Sofern mehrere Mitnehmerzahnkränze an einer Einzugseinrichtung vorgesehen sind, können diese eine unterschiedliche Anzahl von Zähnen aufweisen. Die Messerscheiben der Schneidvorrichtung und der Einzugsvorrichtung können auch mit höherer Drehzahl umlaufen als die jeweilige Transporteinrichtung und der jeweilige Mitnehmerzahnkranz.

In weiterer Ausbildung der Erfindung ist die Drehrichtung der Einzugsvorrichtung und der zugeordneten Schneidvorrichtungen gegenläufig. Vorzugsweise, aber nicht zwangsweise, ist die Umfangsgeschwindigkeit der Einzugsvorrichtung und der Schneidvorrichtungen gleich. Dies gewährleistet gerade im Bereich des Zusammenwirkens der beiden Vorrichtungen, daß die Stengel sicher und ohne zu zerquetschen oder zu verreißen weitergeführt werden.

In Weiterbildung der Erfindung ist der Drehsinn benachbarter Einzugsvorrichtungen gegenläufig. Dabei ist der Drehsinn so ausgelegt, daß immer zwei äußere Einzugsvorrichtungen zusammenwirken und in Fahrtrichtung der Maschine aufeinander zudrehen und somit das aufgenommene Erntegut zwischen sich hindurch nach hinten zur Weiterverarbeitung des Ernteguts fördern.

In Weiterbildung der Erfindung ist jeder Schneidvorrichtung ein sichelförmiges Führungsteil zugeordnet. Dieses sichelförmige Führungsteil ist halbkreisförmig um die Schneidvorrichtung herumgeführt und reicht bis in den Bereich der Zähne der Einzugsvorrichtung. Dabei sind die Führungsteile so zu den, Schneidvorrichtungen angeordnet, daß im wesentlichen der in Fahrtrichtung der Maschine sich drehende Bereich der Schneidvorrichtungen von dem zugeordneten Führungsteil verdeckt ist und das erfaßte Erntegut zwischen den obenliegenden Zahnkränzen einer Schneidvorrichtung und einem anderen, danebenliegenden Führungsteil einer weiteren Schneidvorrichtung oder einem Endführungsteil in einen Einführungsspalt einführt und ggf. schon abschneidet.

In Weiterbildung der Erfindung ist Zwei nebeneinanderliegenden gegenläufigen Schneidvorrichtungen ein gemeinsames Führungsteil zugeordnet. Diese Anordnung bietet sich zur Verringerung des Bauaufwands an.

In Weiterbildung der Erfindung sind den Einzugsvorrichtungen hintere Weiterführungseinrichtungen zugeordnet. Weiterhin ist der Weiterführungseinrichtung eine Leiteinrichtung mit einer sichelförmigen Spitze, die in die Einzugsvorrichtung eingreift, zugeordnet. Dadurch wird eine sichere Weiterführung des Erntegutes gewährleistet, wobei dadurch auch sichergestellt, daß das Erntegut, das aufgenommen und gemäht ist, zwangsläufig in die Weiterverarbeitungsvorrichtung weitergeführt wird. Sowohl zum Schneiden als auch zum Führen kann es vorteilhaft sein, wenn die Messerscheiben 12b der Schneidvorrichtungen 5 und die Messerscheiben 12a der Einzugsvorrichtungen 4 größer als der Abstand der Führungsteile 6a, 6b, 6c und der Weiterführungseinrichtungen 14 sind. Dadurch entsteht ein nach unten geschlossener Führungskanal, so daß die Erntegutstengel mit Abstand zum Boden gehalten werden. Weiterhin bilden die Führungsteile und Weiterführungseinrichtungen für die Messerscheiben Gegendruckflächen zum besseren Schneiden.

Weitere vorteilhafte Ausgestaltungen der Erfindung, sind der Zeichnungsbeschreibung zu entnehmen, in der in den Figuren dargestellte Ausführungsbeispiele näher beschrieben sind.
Es zeigen:
- Figur 1:: ein Ausschnitt einer perspektivischen Gesamtansicht des reihenlosen Schneidwerks,
- Figur 2:: eine Detailansicht mit einer Variante zu Figur 1,
- Figur 3:: eine Draufsicht auf einen Ausschnitt des Schneidwerks und
- Figur 4:: eine Gesamtansicht nach Figur 3.

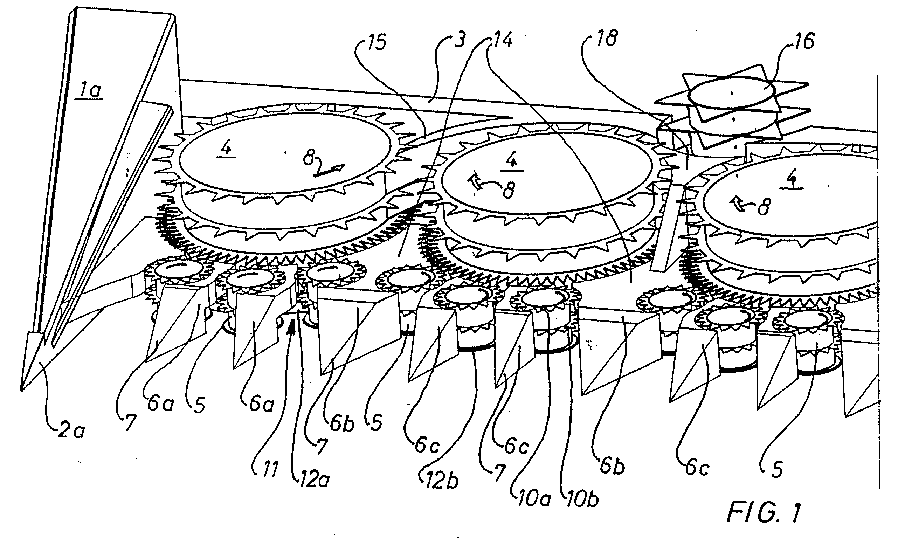

Figur 1 zeigt die linke Seite des reihenlosen Schneidwerks, das in Figur 4 in seiner Gesamtansicht dargestellt ist. Das, reihenlose Schneidwerk kann fest oder wechselbar an einer landwirtschaftlichen Maschine angebracht sein. Die Gesamtbreite des Schneidwerks wird durch eine linke Außenführung 1a und eine rechte Außenführung 1b bestimmt. Die Außenführungen 1a, 1b sind pyramidenförmig ausgebildet, weisen mit je einer Spitze 2a, 2b in Fahrtrichtung der Maschine und sind wie das ganze, Schneidwerk in einem definierten Abstand oberhalb des Erdbodens geführt. Die Außenführungen 1a, 1b sind an einem Trägersystem 3 befestigt, das auch die weiteren noch zu beschreibenden Bauteile trägt. Dies sind zunächst Einzugsvorrichtungen 4, von denen gemäß Figur 4 insgesamt acht Stück bei dem Schneidwerk vorgesehen sind. Diesen Einzugsvorrichtungen 4 sind jeweils drei Schneidvorrichtungen 5 zugeordnet, die sich in Fahrtrichtung vor den Drehachsen der Einzugseinrichtungen 4 befinden. Den insgesamt vierundzwanzig Schneidvorrichtungen 5 sind sichelförmige Führungsteile 6a, 6b, 6c zugeordnet. Diese Führungsteile 6a, 6b, 6c weisen wiederum alle je eine in Fahrtrichtung weisende pyramidenförmige Spitze 7 auf, wobei sich das eigentliche Führungsteil 6a, 6b, 6c halbkreisförmig um die Schneidvorrichtungen 5 erstreckt und in geeigneter Weise ggf. über Zwischenelemente an dem Trägersystem 3 befestigt ist.

Von den Einzugsvorrichtungen 4 rotieren jeweils die beiden äußeren (neben den Außenführungen 1a, 1b) gegenläufig, wie dies durch Pfeile 8 dargestellt ist. Die beiden inneren Einzugsvorrichtungen 4 einer Seite des Schneidwerks rotieren dagegen gleichsinnig. Die einer Einzugsvorrichtung 4 jeweils zugeordneten Schneidvorrichtungen 5 rotieren gegensinnig zu der Drehrichtung der jeweiligen Einzugsvorrichtung 4.

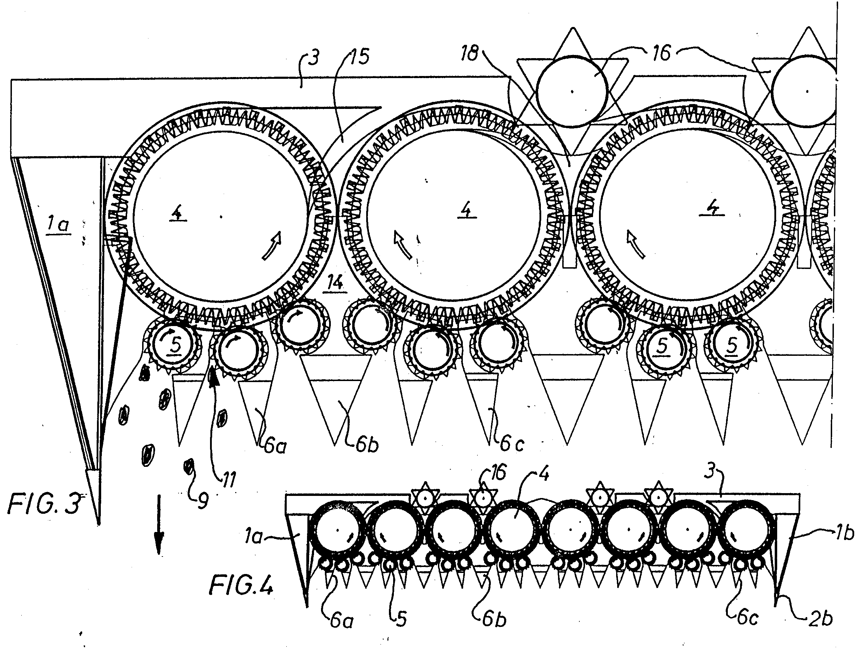

Die Funktionsweise des Schneidwerks wird nachfolgend erläutert, wobei hierzu insbesondere auf Figur 3 Bezug genommen wird.

Das stengelige Erntegut 9, das im äußersten linken Bereich der Figur 3 schematisch dargestellt ist, wird während der Fahrt der Maschine von den Außenführungen 1a, 1b und den Führungsteilen 6a, 6b, 6c den einzelnen Schneidvorrichtungen 5 zugeführt. Da das Schneidwerk in einer geringen Höhe über dem Boden des zu mähenden Feldes geführt ist, werden die Stengel, die nicht genau in der Einzugsrichtung ,stehen, die durch je eine Schneidvorrichtung 5 und einer Außenführung 1a, 1b oder einem Führungsteil 6a, 6b, 6c gebildet ist, durch die Außenführung 1a, 1b oder die. Führungsteile 6a, 6b, 6c geringfügig seitlich weggebogen. Sobald ein Stengel von einer Schneidvorrichtung 5 erfaßt wird, greifen zwei übereinanderliegende Zahnkränze 10a, 10b den Stengel und führen ihn durch einen Einführspalt 11, der durch das nebenliegende Führungsteil 6a, 6b, 6c oder die Außenführung 1a, 1b gebildet ist, bis in den Bereich zu der Einzugsvorrichtung 4. In diesem Bereich wird der Stengel durch das Zusammenwirken von unteren Messerscheiben 12a, 12b der Einzugsvorrichtung 4 und der Schneidvorrichtung 5 abgeschnitten. Dabei kann der Stengel nicht umfallen, da er gleichzeitig zwischen den Zahnkränzen 10a, 10b der Schneidvorrichtung 5 und weiteren Mitnehmerzahnkränzen 17a, 17b, 17c, 17d der Einzugsvorrichtung 4 eingeklemmt ist und zumindest die Messerscheiben 12a der Einzugsvorrichtungen 4 so groß sind, daß sie den Spalt zu den Führungsteilen 6a, 6b, 6c und zu den im folgenden noch beschriebenen Weiterführungseinrichtungen 14a, 14b ausfüllen und damit nach unten (zum Boden) abschließen.

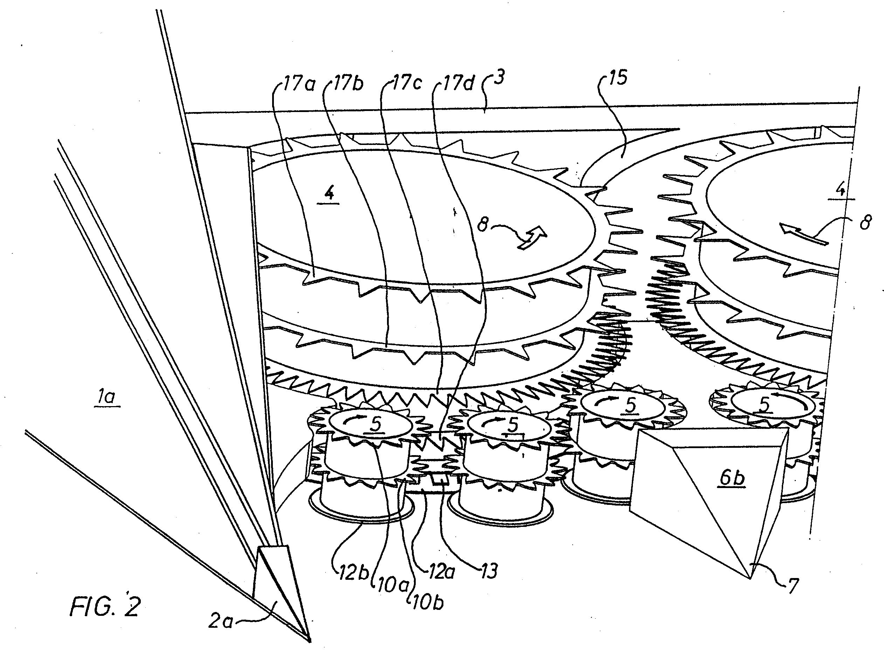

Wie in Figur 2 angedeutet ist, kann oberhalb der Messerscheiben 12a, 12b noch ein Sägezahnblatt 13 zur Führung der Stengel vorgesehen sein. Die Messerscheiben 12a, 12b der Einzugsvorrichtung 4 und der Schneidvorrichtung 5 sind im übrigen an den äußeren Messerspitzen einseitig bogenförmig abgerundet und laufen mit der gegenüberliegenden scharfkantig ausgebildeten Fläche übereinander. Dadurch ergibt sich zwangsläufig ein sauberer Schnitt. Die abgeschnittenen Stengel werden nun von den Mitnehmerzahnkränzen 17a, 17b, 17c, 17d der Einzugsvorrichtungen 4 weiter gefördert, wobei sie, sobald sie aus den Bereich der Schneidvorrichtungen 5 herausgefördert sind, durch hintere Weiterführungseinrichtungen 14, die mit den Führungsteilen 6b verbunden sind, an dem Herausgleiten aus den Mitnehmerzahnkränzen 17a, 17b, 17c, 17d der Einzugsvorrichtung 4 gehindert werden. Dabei können die Weiterführungseinrichtungen 14a, 14b so ausgebildet sein, daß die Mitnehmerzahnkränze 17a, 17b, 17c, 17d der Einzugsvorrichtung 4 mit ihren Spitzen geringfügig in die Weiterführungseinrichtungen 14 eingreifen. Den Weiterführungseinrichtungen 14 schließen sich Leiteinrichtungen 18 an, die mit sichelförmigen Spitzen 15 in die Einzugsvorrichtungen 4 hineinragen und die Weiterführung der abgeschnittenen Stengel beispielsweise von der äußeren Einzugsvorrichtung 4 zu den danebenliegenden Einzugsvorrichtung 4 bewirken. Von dort werden die Stengel dann wiederum durch eine Leiteinrichtung 18 durch Drehkränze 16 einer dahinterliegenden Weiterverarbeitungsvorrichtung zugeführt.

## Patentansprüche

1. Landwirtschaftliche Maschine zum Mähen und Weiterverarbeiten von stengelartigem Erntegut, die die Stengel des Ernteguts im wesentlichen stehend mäht und einer Weiterverarbeitungsvorrichtung zuführt, wobei zwischen zwei die Gesamtbreite der Mäheinrichtung bestimmenden Außenführungen zumindest zwei in Fahrtrichtung im wesentlichen nebeneinander angeordnete und um eine zumindest angenäherte vertikale Achse rotierende, mit abstehenden Mitnehmerzähnen versehene Einzugsvorrichtungen vorhanden sind, wobei den Einzugsvorrichtungen Schneidvorrichtungen zugeordnet sind,
**dadurch gekennzeichnet,** daß die Schneidvorrichtungen (5) in Fahrtrichtung vor den Drehachsen der Einzugsvorrichtungen (4) angeordnet sind und daß einer Einzugsvorrichtung (4) mehrere Schneidvorrichtungen (5) zugeordnet sind.

2. Landwirtschaftliche Maschine nach Anspruch 1,
**dadurch gekennzeichnet,** daß der Einzugsvorrichtung (4) drei Schneidvorrichtungen (5) zugeordnet sind.

3. Landwirtschaftliche Maschine nach einem der vorherigen Ansprüche,
**dadurch gekennzeichnet,** daß die Schneidvorrichtung (5) eine untenliegende Messerscheibe (12b) und eine obenliegende Transporteinrichtung mit zumindest einem Zahnkranz (10a, 10b) aufweist.

4. Landwirtschaftliche, Maschine nach einem der vorherigen Ansprüche,
**dadurch gekennzeichnet,** daß die Schneidvorrichtung (5) oberhalb der Messerscheibe (12b) ein Sägezahnblatt aufweist.

5. Landwirtschaftliche Maschine nach Anspruch 3 oder 4,
**dadurch gekennzeichnet,** daß die Messerscheibe (12b), das Sägezahnblatt (13b) und der zumindest eine Zahnkranz (10a, 10b) starr miteinander verbunden sind.

6. Landwirtschaftliche Maschine nach einem der vorherigen Ansprüche,
**dadurch gekennzeichnet,** daß die Einzugsvorrichtung (4) zumindest einen Mitnehmerzahnkranz (17a, 17b, 17c, 17d) und eine untenliegende Messerscheibe (12a) aufweist.

7. Landwirtschaftliche Maschine nach Anspruch 6,
**dadurch gekennzeichnet,** daß die Messerscheibe (12a) starr mit dem Mitnehmerzahnkranz (17a, 17b, 17c, 17d) verbunden ist.

8. Landwirtschaftliche Maschine nach einem der vorherigen Ansprüche,
**dadurch gekennzeichnet,** daß die Drehrichtung der Einzugsvorrichtung (4) und der zugeordneten Schneidvorrichtungen (5) gegenläufig ist.

9. Landwirtschaftliche Maschine nach einem der vorherigen Ansprüche,
**dadurch gekennzeichnet,** daß der Drehsinn benachbarter Einzugsvorrichtungen (4) gegenläufig ist.

10. Landwirtschaftliche Maschine nach einem der vorherigen Ansprüche,
**dadurch gekennzeichnet,** daß der Schneidvorrichtung (5) ein sichelförmiges Führungsteil (6a, 6b, 6c) zugeordnet ist.

11. Landwirtschaftliche Maschine nach Anspruch 10,
**dadurch gekennzeichnet,** daß zwei nebeneinanderliegenden gegenläufigen Schneidvorrichtungen (5) ein gemeinsames Führungsteil (6b) zugeordnet ist.

12. Landwirtschaftliche Maschine nach einem der Ansprüche 10 oder 11,
**dadurch gekennzeichnet,** daß das Führungsteil (6a, 6b, 6c) halbkreisförmig um die Schneidvorrichtung (5) bis in die Einzugsvorrichtung (4) eingreifend geführt ist.

13. Landwirtschaftliche Maschine nach, einem der vorherigen Ansprüche,
**dadurch gekennzeichnet,** daß dem Führungsteil (6b) eine hintere Weiterführungseinrichtungen (14) zugeordnet ist.

14. Landwirtschaftliche Maschine nach Anspruch 13,
**dadurch gekennzeichnet,** daß die Radien der Messerscheibe (12b) der Schneidvorrichtung (5) und der Messerscheibe (12a) der Einzugsvorrichtung (4) größer als der radiale Abstand der Führungsteile (6a, 6b, 6c) und der Weiterführungseinrichtungen (14) sind, so daß die Messerscheiben im oder unter die Führungsteile und Weiterführungseinrichtungen ragen.

15. Landwirtschaftliche Maschine nach Anspruch 13,
**dadurch gekennzeichnet,** daß der Weiterführungseinrichtung (14) eine Leiteinrichtung (18) mit einer sichelförmigen Spitze (15), die in die Einzugsvorrichtung (4) eingreift, zugeordnet ist.
